# EUROPEAN PATENT SPECIFICATION

(11) **EP 4 227 208 B1**
(45) Date of publication and mention of the grant of the patent: **01.07.2026**
(21) Application number: 21878060.9
(22) Date of filing: 08.10.2021
(51) Int. Cl.: B63H 21/38, B63B 17/00, B63B 25/16, F17C 9/00, F02M 31/18, F02M 21/02, F17C 7/04, F17C 9/04

(54) **GAS TREATMENT SYSTEM AND SHIP INCLUDING SAME**
GASBEHANDLUNGSSYSTEM UND SCHIFF DAMIT
SYSTÈME DE TRAITEMENT DE GAZ ET NAVIRE LE COMPRENANT

(30) Priority: 08.10.2020 KR 20200130566
(43) Date of publication of application: 16.08.2023
(73) Proprietor: Korea Shipbuilding & Offshore Engineering Co., Ltd., Jongno-gu Seoul 03058 (KR)
(72) Inventor: RYU, Gwang Nyeon, Seoul 03058 (KR); YOO, Byeong Yong, Seoul 03058 (KR); LEE, Sung Won, Seoul 03058 (KR); AHN, Dae Hwan, Seoul 03058 (KR); HWANG, Won Ki, Seoul 03058 (KR); SUNG, Suk Min, Seoul 03058 (KR)
(74) Representative: Betten & Resch
(86) International application number: PCT/KR2021/013910
(87) International publication number: WO 2022/075810

(56) References cited:
- JP-A- 2006 168 711
- JP-B2- 6 310 265
- KR-A- 20130 084 908
- KR-A- 20150 017 424
- KR-A- 20150 115 126
- KR-A- 20160 144 890
- KR-A- 20190 073 971
- KR-B1- 102 138 963
- US-A1- 2017 159 611

## Description

### [Technical Field]

The present invention relates to a gas treatment system and a vessel including the same.

### [Background Art]

Vessels are a means of transportation for carrying a large amount of minerals, crude oil, natural gas, or several thousand or more containers and navigating the ocean and are made of steel and moves through thrust generated by the rotation of a propeller in a state of floating on a water plane by buoyancy.

These vessels generate a thrust by driving an engine, a gas turbine, or the like, and in this case, the engine moves a piston using oil fuel, such as gasoline or diesel so that a crankshaft is rotated by a reciprocating motion of the piston, and a shaft connected to the crankshaft is rotated to drive the propeller, while the gas turbine uses a method of combusting fuel together with compressed air, rotating turbine blades through a temperature/pressure of the combustion air to generate power, and transmitting power to the propeller.

However, recently, liquefied natural gas (LNG) carriers for carrying liquefied natural gas, which is a type of liquefied gas, use an LNG fuel supply method for driving targets, such as an engine and a turbine, using LNG as fuel, and since LNG is clean fuel and also has richer reserves than oil, the method using LNG as fuel for the driving targets is also applied to vessels other than the LNG carriers.

However, compared to the conventional case of using oil fuel, such as diesel, since there are still many problems to be solved in the case of using LNG, which is gas fuel, the research and development for a technology of supplying LNG to driving targets in vessels using LNG, which is clean fuel, are continuously conducted.

KR 2013 0084908 A discloses that a natural gas fuel supply system and a ship with the same are provided to make a heat exchanger smaller with improved heat exchange efficiency by heat-exchanging with the heat of an engine relatively higher temperature than seawater.

KR 102 138 963 B1 discloses a gas treatment system and ship having the same.

### [Technical Problem]

The present invention has been made in efforts to solve the problems of the related art and is directed to providing a gas treatment system and a vessel including the same, in which the use of energy may be reduced using waste heat of coolant heated by an engine for heating liquefied gas flowing into the engine.

### [Technical Solution]

The invention is defined in the independent claims. Dependent claims specify embodiments thereof.

A gas treatment system according to one aspect of the present invention includes a first fuel supply line configured to supply fuel to a main engine, a second fuel supply line branched off from the first fuel supply line and configured to supply the fuel to an auxiliary engine, a heat exchanger provided on the first fuel supply line to heat the fuel, and a coolant circulation line of the main engine provided to supply a heat source to the heat exchanger, wherein the coolant circulation line is provided to be divided into a first coolant circulation line circulating through the heat exchanger and a second coolant circulation line circulating through the main engine, characterized by further including a first branch line connecting both ends of the first coolant circulation line to allow a coolant to bypass the main engine and circulate through the heat exchanger, and a second branch line connecting both ends of the second coolant circulation line to allow the coolant to circulate through the main engine while bypassing the heat exchanger.

The gas treatment system may include a backup heater provided on the first coolant circulation line or the first branch line, wherein when a load of the main engine is less than a preset value or the coolant bypasses the main engine by the first branch line, the backup heater may heat the coolant and supply the heated coolant to the heat exchanger.

The gas treatment system may further include a bypass line provided to bypass the backup heater when the coolant is supplied to the heat exchanger via the main engine through the coolant circulation line.

When the main engine is stopped, the first branch line may allow the coolant to bypass the main engine and circulate through the heat exchanger.

The coolant may pass the heat exchanger and the main engine while circulating along the entire coolant circulation line, bypass the main engine and pass the heat exchanger while circulating along the first coolant circulation line and the first branch line, or bypass the heat exchanger and pass the main engine while circulating along the second coolant circulation line and the second branch line.

A first closed loop formed by the first coolant circulation line and the first branch line may be provided independently of a second closed loop formed by the second coolant circulation line and the second branch line.

The gas treatment system may further include an expansion tank provided to adjust a pressure of the coolant flowing along the first closed loop or the second closed loop.

A vessel according to one aspect of the present invention has the gas treatment system.

### [Advantageous Effects]

A gas treatment system and a vessel including the same according to the present invention can heat liquefied gas using coolant used in a main engine, thereby implementing efficient vaporization of the liquefied gas and securing stable heating of the liquefied gas even when the main engine is stopped or the coolant is not sufficiently heated.

### [Description of Drawings]

FIG. 1 is a conceptual diagram of a gas treatment system according to one embodiment of the present invention.
FIG. 2 is a conceptual diagram of a gas treatment system according to one embodiment of the present invention.

### [Modes of the Invention]

Objects, specific advantages, and novel features of the present invention will become more apparent from the following detailed description and exemplary embodiments taken in conjunction with the accompanying drawings. In adding reference numerals to components of each drawing in the specification, it should be noted that the same components have the same numbers as much as possible even when they are shown in different drawings. In addition, in describing the present invention, when it is determined that a detailed description of related known technologies may unnecessarily obscure the gist of the present invention, the detailed description will be omitted.

Hereinafter, a fuel may be a liquefied gas, the liquefied gas may be liquefied petroleum gas (LPG), LNG, ethane, or the like and may exemplarily mean liquefied natural gas (LNG), and evaporation gas may be boil off gas (BOG), such as natural vaporized LNG. In addition, the liquefied gas below may be used as the term including all of a liquid state, a naturally vaporized or forcibly vaporized gas state, and the like, but it should be noted that the evaporation gas may be used as the term meaning gas that is naturally vaporized in a liquefied gas storage tank.

For reference, the present invention includes a vessel having a gas treatment system to be described below. In this case, it should be noted that the vessel is a general merchant ship or an expression including offshore plants, such as a floating LNG (FLNG) plant and a floating storage re-gasification unit (FSRU), and furthermore, may also be replaced with plants or the like installed on land.

Hereinafter, exemplary embodiments of the present invention will be described in detail with reference to the accompanying drawings.

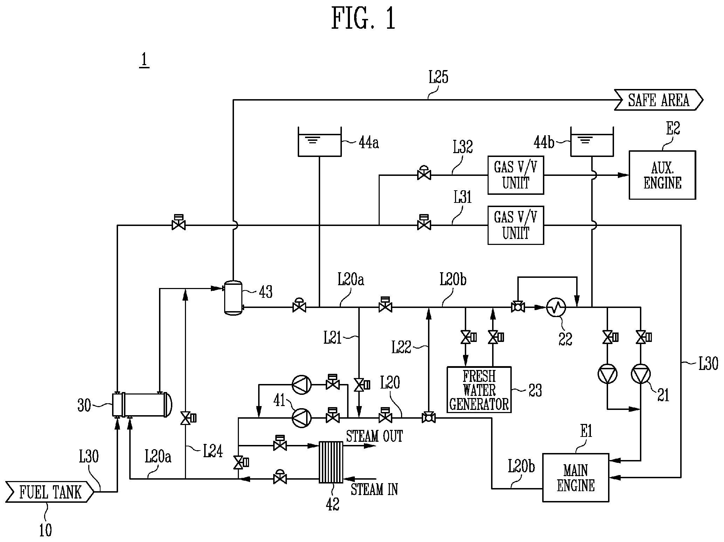

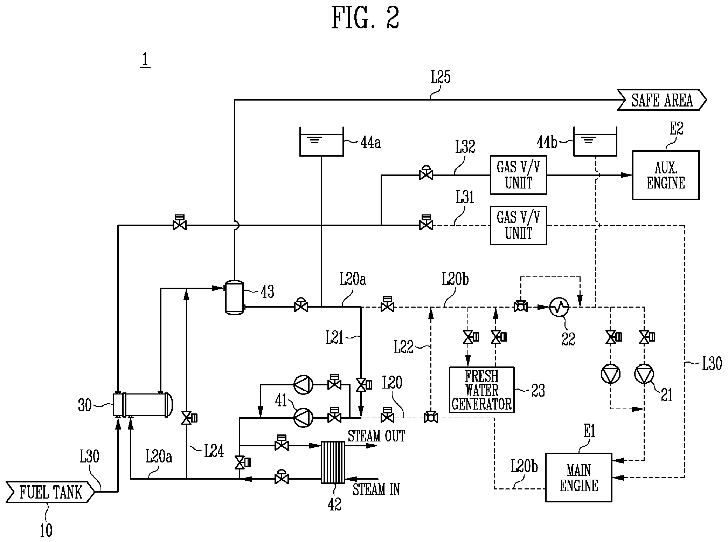

FIGS. 1 and 2 are conceptual diagrams of a gas treatment system according to one embodiment of the present invention.

For reference, FIG. 1 shows a state in which a load of a main engine E1 is greater than or equal to a preset value, and FIG. 2 shows a state in which the load of the main engine E1 is smaller than the preset value or the main engine E1 does not operate.

Referring to FIGS. 1 and 2, a gas treatment system 1 according to one embodiment of the present invention includes a liquefied gas storage tank 10, a coolant pump 21, a coolant cooler 22, a fresh water generator 23, a heat exchanger 30, a booster pump 41, a backup heater 42, and a gas separator 43.

In this case, the coolant pump 21, the coolant cooler 22, the fresh water generator 23, the heat exchanger 30, the booster pump 41, the backup heater 42, and the gas separator 43 may be provided along a coolant circulation line L20, and although will be described below, the coolant pump 21, the coolant cooler 22, and the fresh water generator 23 may be provided in a first closed loop, and the heat exchanger 30, the booster pump 41, the backup heater 42, and the gas separator 43 may be provided in a second closed loop.

The liquefied gas storage tank 10 stores a liquefied gas. The liquefied gas storage tank 10 is an independent tank according to international maritime organization (IMO) regulations and may be a Type A, B, C, or the like or may also be a membrane type tank.

The liquefied gas storage tank 10 may store the liquefied gas at cryogenic temperature, but due to the influence of external heat, the liquefied gas naturally evaporates to generate the evaporation gas. At this time, since the evaporation gas causes an increase in an internal pressure of the liquefied gas storage tank 10, the evaporation gas may be discharged to the outside in order to maintain the stable internal pressure of the liquefied gas storage tank 10.

The liquefied gas (and/or the evaporation gas) accommodated in the liquefied gas storage tank 10 may be supplied to and used in engines E1 and E2, which are driving targets. In this case, the engines E1 and E2 are the main engine E1 (ME-GI, X-DF, ME-LGI, ME-GIE, or the like) for propulsion of a vessel, an auxiliary engine E2 as a power generation engine for covering a power load in the vessel, and the like.

A fuel supply line L30 may be provided to supply the liquefied gas stored in the liquefied gas storage tank 10 to the engines E1 and E2, and specifically, the fuel supply line L30 may include a first fuel supply line L31 for supplying the liquefied gas to the main engine E1 and a second fuel supply line L32 for supplying the liquefied gas to the auxiliary engine E2. In this case, the heat exchanger 30 may be provided on the first fuel supply line L31, and the second fuel supply line L32 may be branched off from the first fuel supply line L31 from a downstream of the heat exchanger 30 and connected to the auxiliary engine E2. In addition, a valve (not shown), a gas valve unit (not shown) for controlling a flow rate of the liquefied gas, or the like may be provided on the first and second fuel supply lines L31 and L32.

The coolant circulation line L20 may include a first coolant circulation line L20a circulating through the heat exchanger 30 and a second coolant circulation line L20b circulating through the main engine E1, and the first coolant circulation line L20a and the second coolant circulation line L20b may be mutually connected to form one closed loop. In addition, the first and second coolant circulation lines L20a and L20b may be provided to separate the flow of the coolant.

Hereinafter, the coolant pump 21, the coolant cooler 22, and the fresh water generator 23 provided at the main engine E1 (a second coolant circulation line L20b) on the coolant circulation line L20 will be first described.

The coolant pump 21 may pump the coolant so that the coolant circulates along the coolant circulation line L20. The coolant circulation line L20 provided with the coolant pump 21 may form a closed loop so that the coolant circulates through the main engine E1 that uses a liquefied gas as fuel and the heat exchanger 30 to be described below. However, the coolant described herein may also be used for the auxiliary engine E2 in addition to the main engine E1.

The coolant pump 21 may be disposed at an upstream of the main engine E1 on the coolant circulation line L20, and a plurality of coolant pumps 21 may be provided in parallel and provided to be mutually backed-up.

The coolant pump 21 may allow the coolant cooled by the coolant cooler 22 to be described below to be supplied to the main engine E1, and the coolant pump 21 may be provided at a downstream of the coolant cooler 22 as shown in the drawing. Alternatively, unlike the drawing, the coolant pump 21 may also be provided at an upstream of the coolant cooler 22 on the coolant circulation line L20.

The coolant cooler 22 cools the coolant that is heated while passing the main engine E1. The coolant cooler 22 may cool the coolant using various refrigerants, such as seawater, fresh water, and air, and may be disposed at an upstream of the coolant pump 21 on the coolant circulation line L20 or the like.

The coolant circulation line L20 may be provided so that at least some of the coolant may bypass the coolant cooler 22, and thus a temperature of the coolant may be adjusted at the downstream of the coolant cooler 22. In other words, when an amount of the coolant bypassing the coolant cooler 22 among the coolant flowing through the upstream of the coolant cooler 22 increases, a temperature at the downstream of the coolant cooler 22 increases, and conversely, when the amount of the coolant bypassing the coolant cooler 22 is reduced, a temperature at the downstream of the coolant cooler 22 is decreases.

The amount of the coolant bypassing the coolant cooler 22 may be determined depending on the temperature of the coolant transmitted to the coolant cooler 22 or may also be determined depending on the load of the main engine E1 that influences the temperature of the coolant.

The fresh water generator 23 generates fresh water using waste heat of the coolant. The fresh water generator 23 may generate steam by heating seawater or the like using high-temperature coolant discharged from the main engine E1 and generate fresh water from the steam. Of course, in addition to the above, the fresh water generator 23 may use all methods capable of heating fresh water using coolant.

The fresh water generator 23 may transmit fresh water to a fresh water tank (not shown), and the coolant may bypass the fresh water generator 23 when an amount of the stored fresh water tank is sufficient or when additional generation of the fresh water is unnecessary.

In other words, as described in the coolant cooler 22, the coolant circulation line L20 may be provided to allow the coolant to bypass the fresh water generator 23. In addition, since the temperature of the coolant may be reduced as the coolant passes the fresh water generator 23, the amount of the coolant bypassing the fresh water generator 23 on the coolant circulation line L20 may be adjusted to adjust the temperature of the coolant at a downstream of the fresh water generator 23.

The fresh water generator 23 may be provided at the upstream of the coolant cooler 22 on the coolant circulation line L20 to allow the high-temperature coolant discharged from the main engine E1 to be primarily cooled through the fresh water generator 23 and then secondarily cooled by the coolant cooler 22.

First and second branch lines L21 and L22 may be provided on the coolant circulation line L20, and the coolant may circulate in the closed loop formed by the coolant circulation line L20 or circulate in the first and second closed loops formed through the first and second branch lines L21 and L22. This will be described in detail below.

The heat exchanger 30 heats the liquefied gas and supplies the heated liquefied gas to the main engine E1, the auxiliary engine E2, and the like. The heat exchanger 30 is a component for heat-exchanging a heat medium with a liquefied gas and may be provided in a shell and tube, a bath type, a printed circuit heat exchanger (PCHE) type, or the like, but the type is not limited thereto.

The heat exchanger 30 may be provided on the first fuel supply line L31 and may be provided with a flow path through which the liquefied gas flows and a flow path through which the heating medium flows. The liquefied gas is heated in the heat exchanger 30 to correspond to temperatures required by the engines E1 and E2 and then transmitted to the engines E1 and E2, and the high-temperature heating medium flows into the heat exchanger 30, then is cooled by the liquefied gas, and then is discharged from the heat exchanger 30.

In the embodiment, the heating medium may be the coolant used in the engines E1 and E2. The heat exchanger 30 may be provided in a type that directly exchanges heat with a liquefied gas using coolant, and the coolant may be one used in the main engine E1 of the engines E1 and E2. Therefore, the heat exchanger 30 may have one side connected to the first fuel supply line L31 and the other side connected to the coolant circulation line L20 through which the coolant flows.

Of course, the present invention may also include an indirect heat exchange method in which the heating medium of the heat exchanger 30 is heated using the coolant rather than a direct heat exchange method in which the coolant directly flows through the heat exchanger 30.

As shown in the drawing, one heat exchanger 30 may be provided or two or more heat exchangers 30 may be provided. When a plurality of heat exchangers 30 are provided, the plurality of heat exchangers 30 may be provided in series and/or in parallel, and a separate heat exchanger 30 may also be assigned to each of the main engine E1 and the auxiliary engine E2.

Hereinafter, the booster pump 41, the backup heater 42, and the gas separator 43 provided at the heat exchanger 30 (a first coolant circulation line L20a) on the coolant circulation line L20 will be described.

The booster pump 41 pumps the high-temperature coolant discharged from the main engine E1 to the heat exchanger 30. The booster pump 41 may be disposed at an upstream of the heat exchanger 30 on the coolant circulation line L20 and may have a function similar to that of the coolant pump 21 described above.

The booster pump 41 may pressurize the coolant in response to the pressure of the liquefied gas flowing into the heat exchanger 30 in order to minimize a pressure difference between the liquefied gas and the coolant in the heat exchanger 30. In this case, a discharge pressure of the booster pump 41 may be relatively higher than a discharge pressure of the coolant pump 21.

Like the coolant pump 21, a plurality of booster pumps 41 may be provided in parallel or in series, and when the booster pumps 41 are provided in parallel, the coolant may be simultaneously pumped by the plurality of booster pumps 41, and thus a load of each booster pump 41 may be reduced.

The backup heater 42 heats at least some of the coolant transmitted to the heat exchanger 30. The backup heater 42 may heat the coolant using a separate heat source so that the coolant has a temperature sufficient to heat the liquefied gas in the heat exchanger 30. In this case, the heat source may be seawater, fresh water, steam, or the like, but is not limited thereto.

The backup heater 42 may be used to cope with a case in which as the load of the main engine E1 is reduced, the temperature of the coolant is reduced and thus heat required for sufficiently heating the liquefied gas in the heat exchanger 30 becomes insufficient, a case in which the temperature of the coolant is reduced due to an outside air temperature, a case in which the main engine E1 is stopped, thereby not heating the coolant, and the like.

The backup heater 42 may be disposed on a downstream of the booster pump 41 on the coolant circulation line L20, but a position of the backup heater 42 is not limited thereto, and the backup heater 42 may also be provided on the first branch line L21 to be described below.

The gas separator 43 separates a gas that may be included in the low-temperature coolant discharged from the heat exchanger 30. The gas separator 43 may be provided at the downstream of the heat exchanger 30 on the coolant circulation line L20 and, when a gas leaks from the heat exchanger 30 and is mixed with the coolant, may detect and separate the gas. To this end, a gas detector (not shown) may be provided in the gas separator 43, and since the gas separated by the gas separator 43 is explosive, the gas may be safely discharged to the outside through a vent line L25.

When the gas separator 43 detects the gas that is mixed with the coolant, the supply of the liquefied gas to the heat exchanger 30 may be blocked to prevent additional leakage of the liquefied gas, and the engines E1 and E2 may be stopped or switched to a mode in which oil fuel or the like rather than the liquefied gas is consumed. For the latter case, the engines E1 and E2 may be dual fuel engines capable of using gas fuel and/or oil fuel.

The gas separator 43 may be disposed between the heat exchanger 30 and the booster pump 41 on the coolant circulation line L20 and may have a container shape that stores the coolant. Therefore, the gas separator 43 may have a partial expansion function on the coolant circulation line L20.

Hereinafter, the coolant circulation line L20 and the first and second branch lines L21 and L22 will be described.

The coolant circulation line L20 may be provided to allow the coolant to circulate through and supply to the main engine E1 and the heat exchanger 30, and the high-temperature coolant may be discharged from the main engine E1, then cooled to a low temperature while exchanging heat with the liquefied gas in the heat exchanger 30, and returned to the main engine E1.

In this case, the coolant circulation line L20 is provided with the first branch line L21 for connecting both ends of the first coolant circulation line L20a to connect the upstream and the downstream of the heat exchanger 30 so that the coolant bypasses the main engine E1 and circulates through the heat exchanger 30.

In addition, the coolant circulation line L20 is provided with the second branch line L22 for connecting both ends of the second coolant circulation line L20b on the coolant circulation line L20 to connect the upstream and downstream of the main engine E1 so that the coolant circulates through the main engine E1 while bypassing the heat exchanger 30.

In this case, the first and second branch lines L21 and L22 together with the first and second coolant circulation lines L20a and L20b may form first and second closed loops provided independently. With this configuration, the coolant may circulate along a total of three closed loops.

Specifically, the coolant may pass the heat exchanger 30 and the main engine E1 while circulating along the entire coolant circulation line L20, bypass the main engine E1 and pass the heat exchanger 30 while circulating along the first coolant circulation line L20a and the first branch line L21, or bypass the heat exchanger 30 and pass the main engine E1 while circulating along the second coolant circulation line L20b and the second branch line L22.

When there is no problem in the operations of the main engine E1 and the heat exchanger 30, both the first and second branch lines L21 and L22 may be closed, and the coolant largely circulates along the entire coolant circulation line L20. Therefore, the coolant repeats a process of being heated in the main engine E1 and cooled in the heat exchanger 30.

In particular, in this case, since the coolant may be heated to a sufficient temperature by the main engine E1 that operates with a normal load, additional heating by the backup heater 42 may be unnecessary. Therefore, the coolant circulation line L20a may be provided with a heater bypass line L23 for allowing the coolant to bypass the backup heater 42 when the coolant is supplied to the heat exchanger 30 via the main engine E1 through the coolant circulation line L20.

However, when the load of the main engine E1 is reduced to the preset value or less, the coolant may be insufficiently heated in the main engine E1, and thus, in this case, the heater bypass line L23 may be blocked and the backup heater 42 may be used.

On the other hand, like a case in which the main engine E1 is stopped, when the coolant may not circulate through the main engine E1 or has low need to circulate therethrough, according to the present invention, the first branch line L21 is opened so that the coolant circulates in the first closed loop formed along the first coolant circulation line L20a and the first branch line L21.

At this time, valves (not shown) capable of blocking the flow of the coolant may be provided at a downstream of a branching point of the first branch line L21 and an upstream of a joining point of the first branch line L21 on the coolant circulation line L20 so that the coolant may circulate in the first closed loop.

The booster pump 41, the backup heater 42, the heat exchanger 30, and the gas separator 43 are provided on the first closed loop, and the coolant is heated in the backup heater 43 and then supplied to the heat exchanger 30. Therefore, according to the present invention, it is possible to ensure stable heating of the liquefied gas in the heat exchanger 30 even when the coolant does not circulate through the main engine E1 or may not circulate therethrough.

Therefore, according to the present invention, in the system in which the main engine E1 and the auxiliary engine E2 share one heat exchanger 30, even when a problem occurs in heating the coolant by the main engine E1, the auxiliary engine E2 is stably operated.

On the other hand, like a case in which leakage of the gas is detected by the gas separator 43 or a case in which fuel other than the liquefied gas is supplied to the engines E1 and E2, when the use of the heat exchanger 30 is undesirable, according to the present invention, the second branch line L22 is opened so that the coolant circulates in the second closed loop formed along the second coolant circulation line L20b and the second branch line L22.

At this time, as described above, valves provided at an upstream of a branching point of the second branch line L22 and the upstream of a joining point of the second branch line L22 on the coolant circulation line L20 may be operated so that the coolant circulates in the second closed loop.

For reference, the valve provided at the downstream of the branching point of the first branch line L21 on the coolant circulation line L20 may be the valve provided at the upstream of the joining point of the second branch line L22 on the coolant circulation line L20, and the valve provided at the upstream of the joining point of the first branch line L21 on the coolant circulation line L20 may be the valve provided at a downstream of the branching point of the second branch line L22 on the coolant circulation line L20.

Of course, the present invention is not construed as being limited to the above-described arrangement of the valves, and a 2-way valve and/or a 3-way valve may be appropriately used.

The coolant pump 21, the coolant cooler 22, and the fresh water generator 23 may be provided on the second closed loop, and the coolant may be heated in the main engine E1 and then cooled in the coolant cooler 22. Therefore, according to the present invention, it is possible to ensure the supply of the coolant to the main engine E1 when the coolant is not transmitted or may not be transmitted to the heat exchanger 30, thereby maintaining the stable operation of the main engine E1.

Expansion tanks 44a and 44b are connected to the coolant circulation line L20. The expansion tanks 44a and 44b may be provided to adjust the pressure of the coolant flowing along the entire coolant circulation line L20.

As a plurality of expansion tanks 44a and 44b are provided and respectively connected to the first closed loop and the second closed loop formed by the first and second branch lines L21 and L22, it is possible to perform coolant pressure adjustment in the first and second closed loops, thereby preventing overpressure in the first and second closed loops. Alternatively, conversely, one of the expansion tanks 44a and 44b may also be integrally connected to the first and second closed loops.

In the former case, the expansion tanks 44a and 44b may be provided to be respectively connected to the first and second coolant circulation lines L20a and L20b. In this case, since the expansion tank 44a connected to the first coolant circulation line L20a is provided at a downstream of the gas separator 43 on the coolant circulation line L20 and the expansion tank 44a is branched off from the coolant circulation line L20, the coolant passing the gas separator 43 may flow without passing the expansion tank 44a. However, when the pressure of the coolant increases at the downstream of the gas separator 43, the coolant may be naturally transmitted to the expansion tank 44a, and thus the pressure of the coolant may be reduced through the expansion tank 44a.

On the other hand, since the expansion tank 44b connected to the second coolant circulation line L20b may be provided to be connected between the coolant cooler 22 and the coolant pump 21 and the expansion tank 44b is branched off from the coolant circulation line L20, the coolant cooled in the coolant cooler 22 may bypass the expansion tank 44b and flow into the coolant pump 21. However, when overpressure occurs in the second closed loop, the coolant may be transmitted to the expansion tank 44b to maintain an introduction pressure of the coolant pump 21 at an appropriate level.

The expansion tanks 44a and 44b may be connected by being branched off from the coolant circulation line L20 or the first and second branch lines L21 and L22 or provided on the coolant circulation line L20 and the first and second branch lines L21 and L22. In addition, the expansion tanks 44a and 44b are not necessarily limited to the form of a container and may include any form that performs a buffer function like a form in which a part of a line is expanded or the like.

By providing the expansion tanks 44a and 44b, according to the present invention, it is possible to secure an overpressure prevention function in the flow of the coolant in in both of a case in which the coolant circulates only in the first closed loop and a case in which the coolant circulates only in the second closed loop.

Additionally, a heat exchanger bypass line L24 for bypassing the heat exchanger 30 may be provided on the coolant circulation line L20 at the upstream of the heat exchanger 30. Therefore, since at least some of the coolant may not be cooled by the liquefied gas while bypassing the heat exchanger 30, the at least some of the coolant may be used to adjust the temperature of the coolant at the downstream of the heat exchanger 30.

The flow to the heat exchanger bypass line L24 may be controlled according to variables, such as the flow rate or temperature of the liquefied gas and the flow rate and temperature of the coolant. For example, in order to prevent excessive heating of the liquefied gas when the temperature of the liquefied gas is relatively high, some of the coolant may be bypassed through the heat exchanger bypass line L24. On the other hand, when a low temperature of the liquefied gas is detected, the flow of the coolant on the heat exchanger bypass line L24 may be blocked.

Hereinafter, various flows of the coolant shown in the embodiment will be described, and as shown in FIG. 1, a case in which the coolant flows along the coolant circulation line L20 will be first described.

Referring to FIG. 1, as described above, since the coolant circulation line L20 forms the closed loop connecting both the main engine E1 and the heat exchanger 30, the high-temperature coolant discharged from the main engine E1 may be transmitted to the heat exchanger 30 through the coolant circulation line L20. Then, the low-temperature coolant discharged from the heat exchanger 30 may flow into the coolant cooler 22 after passing the gas separator 43 or the like along the coolant circulation line L20.

According to this flow, while the coolant flows into the coolant cooler 22, the coolant pump 21, and the main engine E1 along the coolant circulation line L20, at least some of the coolant may flow along the booster pump 41, the backup heater 42 (as necessary), the heat exchanger 30, and the gas separator 43 on the coolant circulation line L20 at the downstream of the main engine E1 and then may be transmitted back to the coolant cooler 22.

This flow may be performed when the coolant is sufficiently heated in the main engine E1 as the main engine E1 normally operates. In other words, in the embodiment, the high-temperature coolant heated while passing the main engine E1 is transmitted to the heat exchanger 30 along the coolant circulation line L20 to transmit the waste heat of the coolant to the liquefied gas of the heat exchanger 30.

In order to sufficiently heat the coolant, the load of the main engine E1 needs to be the preset value or more. In other words, when the load of the main engine E1 is the preset value or more (or when a speed of the vessel is a preset speed or higher), the coolant may circulate along the entire coolant circulation line L20. In this case, since the coolant is sufficiently heated in the main engine E1, at least some of the coolant on the coolant circulation line L20 may bypass the backup heater 42 through the heater bypass line L23 and flow into the heat exchanger 30.

On the other hand, when the load of the main engine E1 is less than the preset value (when the speed of the vessel is lower than the preset speed), the coolant may be insufficiently heated even when the coolant passes the main engine E1. Therefore, in this case, the circulation of the coolant along the coolant circulation line L20 is similar to the above-described case, but the coolant flowing on the coolant circulation line L20 may be additionally heated through the backup heater 42 and then may flow into the heat exchanger 30.

Hereinafter, as shown in FIG. 2, a case in which the coolant flows along the first closed loop formed by the coolant circulation line L20 and the first branch line L21 will be described.

Referring to FIG. 2, when the main engine E1 is stopped to anchor the vessel, the coolant may not flow on the coolant circulation line L20. At this time, since the first branch line L21 is opened by adjusting the valve, the coolant flows along the first closed loop formed by the first coolant circulation line L20a and the first branch line L21.

However, in this case, since the coolant may not be heated by the main engine E1, the backup heater 42 may be used. In other words, the coolant may flow into the heat exchanger 30 after being heated through the backup heater 42 while circulating along the first coolant circulation line L20a and the first branch line L21.

In addition, in this case, as described above, since the pressure of the coolant may be adjusted through the expansion tanks 44a and 44b provided at the downstream of the gas separator 43 and the like on the coolant circulation line L20, the heat exchanger 30 may stably heat the liquefied gas through the coolant without using the waste heat of the main engine E1.

As described above, in the embodiment, by heating the liquefied gas supplied to the engines E1 and E2 using the coolant of the main engine E1, controlling the flow of the coolant according to the load and operation of the main engine E1, and appropriately using the backup heater 42, it is possible to secure the operation stability of the power generation engine through the stable heating of the liquefied gas.

All simple modifications or changes of the present invention fall within the scope of the present invention, and the specific scope of the present invention will be clarified by the appended claims.

## Claims

1. A gas treatment system (1) comprising:
a first fuel supply line (L31) configured to supply fuel to a main engine (E1);
a second fuel supply line (L32) branched off from the first fuel supply line (L31) and configured to supply the fuel to an auxiliary engine (E2);
a heat exchanger (30) provided on the first fuel supply line (L31) to heat the fuel; and
a coolant circulation line (L20) of the main engine (E1) provided to supply a heat source to the heat exchanger (30),
wherein the coolant circulation line (L20) is provided to be divided into a first coolant circulation line (L20a) circulating through the heat exchanger (30) and a second coolant circulation line circulating through the main engine (E1),
**characterized by** further comprising:
a first branch line (L21) connecting both ends of the first coolant circulation line (L20a) to allow a coolant to bypass the main engine (E1) and circulate through the heat exchanger (30); and
a second branch line (L22) connecting both ends of the second coolant circulation line to allow the coolant to circulate through the main engine (E1) while bypassing the heat exchanger (30).

2. The gas treatment system (1) of claim 1, comprising a backup heater (42) provided on the first coolant circulation line (L20a) or the first branch line (L21),
wherein, when a load of the main engine (E1) is less than a preset value or the coolant bypasses the main engine (E1) by the first branch line (L21), the backup heater (42) heats the coolant and supplies the heated coolant to the heat exchanger (30).

3. The gas treatment system (1) of claim 2, further comprising a bypass line (L23) provided to bypass the backup heater (42) when the coolant is supplied to the heat exchanger (30) via the main engine (E1) through the coolant circulation line (L20).

4. The gas treatment system (1) of claim 1, wherein, when the main engine (E1) is stopped, the first branch line (L21) allows the coolant to bypass the main engine (E1) and circulate through the heat exchanger (30).

5. The gas treatment system (1) of claim 1, wherein the coolant passes the heat exchanger (30) and the main engine (E1) while circulating along the entire coolant circulation line,
bypasses the main engine (E1) and passes the heat exchanger (30) while circulating along the first coolant circulation line (L20a) and the first branch line (L21), or
bypasses the heat exchanger (30) and passes the main engine (E1) while circulating along the second coolant circulation line and the second branch line (L22).

6. The gas treatment system (1) of claim 5, wherein a first closed loop formed by the first coolant circulation line (L20a) and the first branch line (L21) is provided independently of a second closed loop formed by the second coolant circulation line and the second branch line (L22).

7. The gas treatment system (1) of claim 6, further comprising an expansion tank (44a, 44b) provided to adjust a pressure of the coolant flowing along the first closed loop or the second closed loop.

8. A vessel having the gas treatment system (1) of any one of claims 1 to 7.

## Patentansprüche

1. Gasbehandlungssystem (1), umfassend:
eine erste Brennstoffzufuhrleitung (L31), die dazu konfiguriert ist, einem Hauptmotor (E1) Brennstoff zuzuführen;
eine zweite Brennstoffzufuhrleitung (L32), die von der ersten Brennstoffzufuhrleitung (L31) abgezweigt und dazu konfiguriert ist, den Brennstoff einem Hilfsmotor (E2) zuzuführen;
einen Wärmetauscher (30), der an der ersten Brennstoffzufuhrleitung (L31) bereitgestellt ist, um den Brennstoff zu erhitzen; und
eine Kühlmittelzirkulationsleitung (L20) des Hauptmotors (E1), die dazu bereitgestellt ist, dem Wärmetauscher (30) eine Wärmequelle zuzuführen,
wobei die Kühlmittelzirkulationsleitung (L20) dazu bereitgestellt ist, in eine erste Kühlmittelzirkulationsleitung (L20a), die durch den Wärmetauscher (30) zirkuliert, und eine zweite Kühlmittelzirkulationsleitung, die durch den Hauptmotor (E1) zirkuliert, geteilt zu sein,
**dadurch gekennzeichnet, dass** es ferner Folgendes umfasst:
eine erste Zweigleitung (L21), die beide Enden der ersten Kühlmittelzirkulationsleitung (L20a) verbindet, um es einem Kühlmittel zu ermöglichen, den Hauptmotor (E1) zu umgehen und durch den Wärmetauscher (30) zu zirkulieren; und
eine zweite Zweigleitung (L22), die beide Enden der zweiten Kühlmittelzirkulationsleitung verbindet, um es dem Kühlmittel zu ermöglichen, durch den Hauptmotor (E1) zu zirkulieren, während es den Wärmetauscher (30) umgeht.

2. Gasbehandlungssystem (1) nach Anspruch 1, umfassend einen Reserveheizer (42), der an der ersten Kühlmittelzirkulationsleitung (L20a) oder der ersten Zweigleitung (L21) bereitgestellt ist,
wobei, wenn eine Last des Hauptmotors (E1) geringer als ein voreingestellter Wert ist oder das Kühlmittel den Hauptmotor (E1) durch die erste Zweigleitung (L21) umgeht, der Reserveheizer (42) das Kühlmittel erhitzt und das erhitzte Kühlmittel dem Wärmetauscher (30) zuführt.

3. Gasbehandlungssystem (1) nach Anspruch 2, ferner umfassend eine Umgehungsleitung (L23), die dazu bereitgestellt ist, den Reserveheizer (42) zu umgehen, wenn das Kühlmittel über den Hauptmotor (E1) durch die Kühlmittelzirkulationsleitung (L20) dem Wärmetauscher (30) zugeführt wird.

4. Gasbehandlungssystem (1) nach Anspruch 1, wobei, wenn der Hauptmotor (E1) gestoppt ist, die erste Zweigleitung (L21) es dem Kühlmittel ermöglicht, den Hauptmotor (E1) zu umgehen und durch den Wärmetauscher (30) zu zirkulieren.

5. Gasbehandlungssystem (1) nach Anspruch 1, wobei das Kühlmittel den Wärmetauscher (30) und den Hauptmotor (E1) passiert, während es entlang der gesamten Kühlmittelzirkulationsleitung zirkuliert,
den Hauptmotor (E1) umgeht und den Wärmetauscher (30) passiert, während es entlang der ersten Kühlmittelzirkulationsleitung (L20a) und der ersten Zweigleitung (L21) zirkuliert, oder
den Wärmetauscher (30) umgeht und den Hauptmotor (E1) passiert, während es entlang der zweiten Kühlmittelzirkulationsleitung und der zweiten Zweigleitung (L22) zirkuliert.

6. Gasbehandlungssystem (1) nach Anspruch 5, wobei ein erster geschlossener Kreislauf, der durch die erste Kühlmittelzirkulationsleitung (L20a) und die erste Zweigleitung (L21) gebildet wird, unabhängig von einem zweiten geschlossenen Kreislauf, der durch die zweite Kühlmittelzirkulationsleitung und die zweite Zweigleitung (L22) gebildet wird, bereitgestellt ist.

7. Gasbehandlungssystem (1) nach Anspruch 6, ferner umfassend einen Expansionstank (44a, 44b), der dazu bereitgestellt ist, einen Druck des Kühlmittels, das entlang des ersten geschlossenen Kreislaufs oder des zweiten geschlossenen Kreislaufs fließt, anzupassen.

8. Schiff, aufweisend das Gasbehandlungssystem (1) nach einem der Ansprüche 1 bis 7.

## Revendications

1. Système de traitement de gaz (1) comprenant :
une première conduite d'alimentation en carburant (L31) configurée pour fournir un carburant un moteur principal (E1) ;
une deuxième conduite d'alimentation en carburant (L32) qui part de la première conduite d'alimentation en carburant (L31) et qui est configurée pour fournir le carburant à un moteur auxiliaire (E2) ;
un échangeur de chaleur (30) prévu sur la première conduite d'alimentation en carburant (L31) pour chauffer le carburant ; et
une conduite de circulation de liquide de refroidissement (L20) du moteur principal (E1) prévue pour fournir une source de chaleur à l'échangeur de chaleur (30),
où la conduite de circulation de liquide de refroidissement (L20) est prévue de manière à être divisée en une première conduite de circulation de liquide de refroidissement (L20a) circulant à travers l'échangeur de chaleur (30) et une deuxième conduite de circulation de liquide de refroidissement circulant à travers le moteur principal (E1),
**caractérisé en ce qu'**il comprend en outre :
une première conduite secondaire (L21) reliant les deux extrémités de la première conduite de circulation de liquide de refroidissement (L20a) pour permettre à un liquide de refroidissement de contourner le moteur principal (E1) et de circuler à travers l'échangeur de chaleur (30) ; et
une deuxième conduite secondaire (L22) reliant les deux extrémités de la deuxième conduite de circulation de liquide de refroidissement pour permettre au liquide de refroidissement de circuler à travers le moteur principal (E1) tout en contournant l'échangeur de chaleur (30).

2. Système de traitement de gaz (1) de la revendication 1, comprenant un chauffage d'appoint (42) prévu sur la première conduite de circulation de liquide de refroidissement (L20a) ou sur la première conduite secondaire (L21),
où, lorsqu'une charge du moteur principal (E1) est inférieure à une valeur prédéfinie ou que le liquide de refroidissement contourne le moteur principal (E1) par la première conduite secondaire (L21), le chauffage d'appoint (42) chauffe le liquide de refroidissement et fournit le liquide de refroidissement chauffé à l'échangeur de chaleur (30).

3. Système de traitement de gaz (1) de la revendication 2, comprenant en outre une conduite de contournement (L23) prévue pour contourner le chauffage d'appoint (42) lorsque le liquide de refroidissement est fourni à l'échangeur de chaleur (30) via le moteur principal (E1) à travers la conduite de circulation de liquide de refroidissement (L20).

4. Système de traitement de gaz (1) de la revendication 1, où, lorsque le moteur principal (E1) est à l'arrêt, la première conduite secondaire (L21) permet au liquide de refroidissement de contourner le moteur principal (E1) et de circuler à travers l'échangeur de chaleur (30).

5. Système de traitement de gaz (1) de la revendication 1, où le liquide de refroidissement passe par l'échangeur de chaleur (30) et le moteur principal (E1) tout en circulant le long de l'ensemble de la conduite de circulation de liquide de refroidissement,
contourne le moteur principal (E1) et passe par l'échangeur de chaleur (30) tout en circulant le long de la première conduite de circulation de liquide de refroidissement (L20a) et de la première conduite secondaire (L21), ou
contourne l'échangeur de chaleur (30) et passe par le moteur principal (E1) tout en circulant le long de la deuxième conduite de circulation de liquide de refroidissement et de la deuxième conduite secondaire (L22).

6. Système de traitement de gaz (1) de la revendication 5, où une première boucle fermée formée par la première conduite de circulation de liquide de refroidissement (L20a) et la première conduite secondaire (L21) est prévue indépendamment d'une deuxième boucle fermée formée par la deuxième conduite de circulation de liquide de refroidissement et la deuxième conduite secondaire (L22).

7. Système de traitement de gaz (1) de la revendication 6, comprenant en outre un réservoir d'expansion (44a, 44b) destiné à ajuster une pression du liquide de refroidissement circulant dans la première boucle fermée ou dans la deuxième boucle fermée.

8. Navire comprenant le système de traitement de gaz (1) de l'une quelconque des revendications 1 à 7.
